# EUROPÄISCHE PATENTANMELDUNG

(11) **EP 2 555 279 A1**
(43) Veröffentlichungstag der Anmeldung: **06.02.2013**
(21) Anmeldenummer: 12172722.6
(22) Anmeldetag: 20.06.2012
(51) Int. Cl.: H01M 2/10

(54) **Energieversorgungsvorrichtung**

(30) Priorität: 03.08.2011 DE 102011080309
(71) Anmelder: Robert Bosch GmbH, 70442 Stuttgart (DE)
(72) Erfinder: Feucht, Guenter, 71732 Tamm (DE); Eckert, Bernd, 71665 Vaihingen An Der Enz (DE)

(57) **Zusammenfassung**

Die Erfindung geht aus von einer Energieversorgungsvorrichtung, insbesondere von einer Batterie, mit zumindest einer Energiespeichereinheit (12), die zumindest eine Speicherzelle (14, 16, 18, 20) umfasst.

Es wird vorgeschlagen, dass die Energieversorgungsvorrichtung zumindest eine Betriebsstoffspeichereinheit (22) zu einer Speicherung von zumindest einem Betriebsstoff aufweist, der von Betriebsstoffen der Speicherzelle (14, 16, 18, 20) verschieden ist.

## Beschreibung

### Stand der Technik

Es sind bereits Energieversorgungsvorrichtungen bekannt, die eine Energiespeichereinheit aufweisen, die eine Speicherzelle umfasst.

### Offenbarung der Erfindung

Die Erfindung geht aus von einer Energieversorgungsvorrichtung, insbesondere von einer Batterie, mit zumindest einer Energiespeichereinheit, die zumindest eine Speicherzelle umfasst.

Es wird vorgeschlagen, dass die Energieversorgungsvorrichtung zumindest eine Betriebsstoffspeichereinheit zu einer Speicherung von zumindest einem Betriebsstoff umfasst, der von Betriebsstoffen der Speicherzelle verschieden ist. Unter einer "Energiespeichereinheit" soll hier insbesondere eine Einheit verstanden werden, die dazu vorgesehen ist, elektrische Energie zu speichern und/oder chemische in elektrische Energie umzuwandeln. Bevorzugt wird die elektrische Energie in chemischer Form in der Energiespeichereinheit auf eine, einem Fachmann bereits bekannte Art und Weise gespeichert und bei Bedarf bevorzugt mittels einer Redoxreaktion in elektrische Energie umgewandelt. Vorzugsweise ist die Speicherzelle als galvanische Zelle ausgebildet. Hierbei kann die Energiespeichereinheit eine, einem Fachmann als sinnvoll erscheinende Anzahl an Speicherzellen aufweisen, die als galvanische Zellen ausgebildet sind und die miteinander gekoppelt sind. Bevorzugt sind die Speicherzellen hierbei in Reihe geschaltet. Der Begriff "Betriebsstoffspeichereinheit" soll hier insbesondere eine Einheit definieren, die dazu vorgesehen ist, einen Betriebsstoff zu speichern, der zur Aufrechterhaltung einer Einsatzbereitschaft einer zu einer Bearbeitung von Werkstücken vorgesehenen Werkzeugmaschine, insbesondere einer tragbaren Werkzeugmaschine, vorgesehen ist. Vorzugsweise wird der Betriebsstoff, der in der Betriebsstoffspeichereinheit gespeichert wird, von einem Fluid gebildet. Besonders bevorzugt ist der Betriebsstoff, der in der Betriebsstoffspeichereinheit gespeichert wird, als Schmiermittel ausgebildet. Das Schmiermittel ist bevorzugt zu einer Schmierung eines mit einer Antriebseinheit verbundenen Werkzeugs vorgesehen. Insbesondere ist das Schmiermittel dazu vorgesehen, eine Schneidkette einer als elektrische Kettensäge ausgebildeten, tragbaren Werkzeugmaschine während eines Betriebs zu schmieren. Somit ist die Betriebsstoffspeichereinheit vorzugsweise als Schmiermittelspeichereinheit ausgebildet. Es ist jedoch auch denkbar, dass die Betriebsstoffspeichereinheit und/oder der Betriebsstoff, der in der Betriebsstoffspeichereinheit speicherbar ist, eine andere, einem Fachmann als sinnvoll erscheinende Ausgestaltung aufweist, wie beispielsweise eine Ausgestaltung des Betriebsstoffs als Kühlmittel zur Kühlung einer Antriebseinheit der tragbaren Werkzeugmaschine usw. Zudem ist es in einer alternativen Ausgestaltung der Energieversorgungsvorrichtung denkbar, dass die Betriebsstoffspeichereinheit als Betriebsstoffspeicherpatrone ausgebildet ist, die austauschbar in der Energieversorgungsvorrichtung angeordnet ist und bei Bedarf gewechselt werden kann. Ferner ist es ebenfalls denkbar, dass die als Betriebsstoffspeicherpatrone ausgebildete Betriebsstoffspeichereinheit beispielsweise direkt austauschbar in eine tragbare Werkzeugmaschine einsetzbar ist.

Unter dem Ausdruck "von Betriebsstoffen der Speicherzelle verschieden" soll hier insbesondere verstanden werden, dass der Betriebsstoff, der in der Betriebsstoffspeichereinheit gespeichert werden kann, entkoppelt ist von einer Energieumwandlung der Speicherzelle zur Erzeugung einer elektrischen Energie. Der Betriebsstoff, der in der Betriebsstoffspeichereinheit gespeichert werden kann, ist bevorzugt räumlich getrennt von Betriebsstoffen der Speicherzelle, die genutzt werden, um elektrische Energie zu erzeugen. Mittels der erfindungsgemäßen Ausgestaltung der Energieversorgungsvorrichtung kann vorteilhaft eine Zusatzfunktion in die Energieversorgungsvorrichtung integriert werden. Zudem kann vorteilhaft eine Versorgung einer mit der Energieversorgungsvorrichtung koppelbaren Werkzeugmaschine mit für einen ordnungsgemäßen Betrieb notwendigen Betriebsstoffen vorteilhaft bei einer Kopplung mit der Energieversorgungsvorrichtung sichergestellt werden. Somit kann mittels eines Nutzens der erfindungsgemäßen Energieversorgungsvorrichtung in einer entsprechenden tragbaren Werkzeugmaschine eine lange Lebensdauer der tragbaren Werkzeugmaschine und/oder eines mit der tragbaren Werkzeugmaschine gekoppelten Werkzeugs erreicht werden. Es kann vorteilhaft komfortabel eine Einhaltung von Wechselintervallen von Betriebsstoffen zu einem ordnungsgemäßen Betrieb einer mit der erfindungsgemäßen Energieversorgungsvorrichtung gekoppelten tragbaren Werkzeugmaschine gewährleistet werden.

Des Weiteren wird vorgeschlagen, dass die Speicherzelle als wiederaufladbare Speicherzelle ausgebildet ist. Somit ist die Speicherzelle bevorzugt als Sekundärzelle ausgebildet, die durch eine gegenüber einer Entladung gegenläufigen Stromrichtung wieder neu aufgeladen werden kann. Die Energieversorgungsvorrichtung ist daher bevorzugt als wiederaufladbare Batterie ausgebildet. Es kann vorteilhaft eine mehrmalige Verwendung der erfindungsgemäßen Energieversorgungsvorrichtung durch ein Wiederaufladen der erfindungsgemäßen Energieversorgungsvorrichtung erreicht werden.

Ferner wird vorgeschlagen, dass die Betriebsstoffspeichereinheit zumindest ein Betriebsstoffventil aufweist, das einen Betriebsstoffspeicherraum der Betriebsstoffspeichereinheit selbsttätig verschließt. Unter einem "Betriebsstoffventil" soll hier insbesondere ein Bauteil verstanden werden, das dazu vorgesehen ist, einen Ein- und/oder Auslass von Betriebsstoffen in einen Speicherraum, insbesondere den Betriebsstoffspeicherraum, zu kontrollieren und/oder eine Fließrichtung von Betriebsstoffen zu steuern und/oder zu regeln. Vorzugsweise ist das Betriebsstoffventil dazu vorgesehen, den Betriebsstoffspeicherraum zu öffnen und/oder zu schließen. Das Betriebsstoffventil ist bevorzugt als Rückschlagventil ausgebildet. Es ist jedoch auch denkbar, dass das Betriebsstoffventil eine andere, einem Fachmann als sinnvoll erscheinende Ausgestaltung aufweist. Hierbei ist es denkbar, dass die Betriebsstoffspeichereinheit eine Steuer- und/oder Regeleinheit umfasst, die Sensoren aufweist und bei einer Detektion eines aus einer Ladevorrichtung oder aus einer tragbaren Werkzeugmaschine entnommenen Zustands einen Ein- und/oder Auslass des Betriebsstoffspeicherraums mittels eines mechanischen oder elektromechanischen Schiebers der Energieversorgungsvorrichtung verschließt. Eine Betätigung des mechanischen oder elektromechanischen Schiebers mittels eines Bedienelements der Steuer- und/oder Regeleinheit, das von einem Bediener betätigbar ist, ist zusätzlich ebenfalls denkbar. Somit kann der mechanische oder elektromechanische Schieber je nach Bedarf mittels einer Betätigung des Bedienelements von einem Bediener geöffnet und/oder geschlossen werden. Mittels der erfindungsgemäßen Ausgestaltung der Betriebsstoffspeichereinheit kann vorteilhaft ein Austreten eines in dem Betriebsstoffspeicherraum befindlichen Betriebsstoffs verhindert werden, insbesondere in einem mit einer Ladevorrichtung oder mit einer tragbaren Werkzeugmaschine ungekoppelten Zustand der Energieversorgungsvorrichtung. Zudem kann vorteilhaft eine Verschmutzung des in dem Betriebsstoffspeicherraum befindlichen Betriebsstoffs weitestgehend vermieden werden bzw. gering gehalten werden.

Vorteilhafterweise ist das Betriebsstoffventil dazu vorgesehen, den Betriebsstoffspeicherraum in einem in einer tragbaren Werkzeugmaschine und/oder in einer Ladevorrichtung befindlichen Zustand selbsttätig zu öffnen. Es ist jedoch auch denkbar, dass in einer alternativen Ausgestaltung das Betriebsstoffventil von einem Bediener durch eine Betätigung des Bedienelements der Steuer- und/oder Regeleinheit in einem in einer tragbaren Werkzeugmaschine und/oder in einer Ladevorrichtung befindlichen Zustand geschlossen wird. Mittels der erfindungsgemäßen Ausgestaltung des Betriebsstoffventils kann vorteilhaft ein zuverlässiger Fluss des Betriebsstoffs aus dem Betriebsstoffspeicherraum heraus oder in den Betriebsstoffspeicherraum hinein ermöglicht werden. Somit kann vorteilhaft eine komfortable Bedienbarkeit bei einem Einlegen und/oder Einschieben der erfindungsgemäßen Energieversorgungsvorrichtung erreicht werden.

Zudem wird vorgeschlagen, dass die Energieversorgungsvorrichtung eine Gehäuseeinheit umfasst, die die Energiespeichereinheit und die Betriebsstoffspeichereinheit umschließt. Die Gehäuseeinheit ist bevorzugt aus einem Kunststoff gebildet. Es ist jedoch auch denkbar, dass die Gehäuseeinheit aus einem Metall, wie beispielsweise Aluminium, oder aus anderen, einem Fachmann als sinnvoll erscheinenden Materialien gebildet ist. Vorzugsweise weist die Gehäuseeinheit zumindest zwei Kammern auf, wobei in einer Kammer die Energiespeichereinheit angeordnet ist und in einer weiteren Kammer die Betriebsstoffspeichereinheit angeordnet ist. Mittels der Gehäuseeinheit kann vorteilhaft ein Schutz der Energiespeichereinheit und der Betriebsstoffspeichereinheit erreicht werden, insbesondere vor Umwelteinflüssen, vor Verschmutzung, vor Beschädigung usw.

Ferner geht die Erfindung aus von einer Ladevorrichtung zu einer Wiederaufladung der erfindungsgemäßen Energieversorgungsvorrichtung. Die Ladevorrichtung umfasst bevorzugt eine Steuer- und/oder Regeleinheit, die beispielsweise einen Mikrocontroller umfasst, um verschiedene Ladeverfahren zu realisieren, wie beispielsweise eine Ladung der erfindungsgemäßen Energieversorgungsvorrichtung mittels Stromimpulsen. Zudem kann vorzugsweise eine Erkennung einer Vollladung der mit der Ladevorrichtung gekoppelten Energieversorgungsvorrichtung aufgrund beispielsweise einer Erkennung eines Gasungsbuckels in der galvanischen Zelle ermöglicht werden, um eine sichere Schnellladung ohne die Gefahr schädlicher Überladung zu erreichen. Weitere Möglichkeiten sind zum Beispiel eine automatische Entladung der Energieversorgungsvorrichtung vor einem Ladebeginn, eine Cycle- / Alive-Funktion (mehrmaliges Laden und Entladen zur Regeneration der galvanischen Zelle) oder ein automatisches Umschalten auf eine Erhaltungsladung nach einem Ladeende. Mittels der erfindungsgemäßen Ausgestaltung der Ladevorrichtung kann vorteilhaft ein komfortables Wiederaufladen der Speicherzelle der Energieversorgungsvorrichtung erreicht werden.

Vorteilhafterweise umfasst die Ladevorrichtung zumindest eine Betriebsstoffzuführeinheit, die dazu vorgesehen ist, einen Betriebsstoffspeicherraum der Betriebsstoffspeichereinheit während eines Ladezustands mit zumindest dem Betriebsstoff zu füllen. Bevorzugt wird bei jedem Ladezyklus der Speicherzelle zugleich der Betriebsstoffspeicherraum mit dem Betriebsstoff gefüllt. Hierbei umfasst die Ladevorrichtung vorzugsweise eine Füllstandsüberwachungseinheit, die einen Füllstand des Betriebsstoffspeicherraums überwacht und anhand eines Ist-Zustands des Füllstands des Betriebsstoffspeicherraums eine entsprechende Menge an Betriebsstoff nachfüllt. Es kann vorteilhaft eine zuverlässige Füllung des Betriebsstoffspeicherraums mit dem Betriebsstoff erreicht werden. Somit kann vorteilhaft sichergestellt werden, dass während einem Betrieb einer mit der Energieversorgungsvorrichtung gekoppelten tragbaren Werkzeugmaschine eine ausreichende Menge an Betriebsstoff im Betriebsstoffspeicherraum gespeichert ist.

Des Weiteren geht die Erfindung aus von einer tragbaren Werkzeugmaschine mit einer Energieversorgungsschnittstelle zu einer Aufnahme einer erfindungsgemäßen Energieversorgungsvorrichtung. Unter einer "tragbaren Werkzeugmaschine" soll hier insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg. Die tragbare Werkzeugmaschine ist bevorzugt als Kettensäge ausgebildet. Es ist jedoch auch denkbar, dass die tragbare Werkzeugmaschine eine andere, einem Fachmann als sinnvoll erscheinende Ausgestaltung aufweist, wie beispielsweise eine Ausgestaltung als akkubetriebene Bohrmaschine, als akkubetriebene Hobelmaschine, als akkubetriebene Gartenmaschine, als akkubetriebene Schleifmaschine usw. Mittels der erfindungsgemäßen Ausgestaltung der tragbaren Werkzeugmaschine kann vorteilhaft eine zuverlässige Versorgung der tragbaren Werkzeugmaschine und/oder eines mit der tragbaren Werkzeugmaschine gekoppelten Werkzeugs mit einem in der Energieversorgungsvorrichtung gespeicherten Betriebsstoff erreicht werden.

Vorteilhafterweise umfasst die tragbare Werkzeugmaschine zumindest eine Betriebsstoffüberwachungseinheit, die dazu vorgesehen ist, ein Fehlen und/oder einen zu geringen Füllstand zumindest eines Betriebsstoffs zu sensieren. Bevorzugt greift die Betriebsstoffüberwachungseinheit bei einem Unterschreiten eines vorgegebenen minimalen Füllstands eines Betriebsstoffs und/oder bei einem Fehlen eines Betriebsstoffs zusätzlich zu einer Signalisierung in eine Antriebseinheitssteuerung der tragbaren Werkzeugmaschine ein und verhindert eine Energieversorgung einer Antriebseinheit der tragbaren Werkzeugmaschine und somit einen Betrieb der tragbaren Werkzeugmaschine. Es ist auch denkbar, dass die Betriebsstoffüberwachungseinheit in einer kabelgebundenen, netzabhängigen Werkzeugmaschine zu einer Überwachung von Betriebsstoffen vorgesehen ist, insbesondere in Kombination mit einer als austauschbare Betriebsstoffspeicherpatrone ausgebildeten Betriebsstoffspeichereinheit. Besonders bevorzugt bilden die erfindungsgemäße Energieversorgungsvorrichtung, die erfindungsgemäße Ladevorrichtung und die erfindungsgemäße tragbare Werkzeugmaschine zusammen ein Werkzeugsystem. Mittels der erfindungsgemäßen Betriebsstoffüberwachungseinheit kann vorteilhaft ein Betriebszustand der tragbaren Werkzeugmaschine erkannt und/oder vermieden werden, in dem für einen Betrieb der tragbaren Werkzeugmaschine benötigte Betriebsstoffe fehlen bzw. ein Füllstand der Betriebsstoffe zu gering ist. Somit kann vorteilhaft eine lange Lebensdauer der tragbaren Werkzeugmaschine erreicht werden.

Vorzugsweise umfasst die Betriebsstoffüberwachungseinheit zumindest eine Signalisierungseinheit, die dazu vorgesehen ist, einem Bediener ein Fehlen und/oder einen zu geringen Füllstand zumindest eines Betriebsstoffs zu signalisieren. Bevorzugt umfasst die Signalisierungseinheit eine Anzeigeeinheit und/oder eine Akustikeinheit und/oder eine Haptikeinheit. Die Anzeigeeinheit umfasst bevorzugt ein analoges oder digitales Anzeigeelement, wie beispielsweise ein LC-Display, ein Zeigerinstrument, eine oder mehrere Leuchtdiode/n. Vorzugsweise weist die Akustikeinheit ein Tonausgabeelement, wie beispielsweise einen Lautsprecher oder andere, einem Fachmann als sinnvoll erscheinende Tonausgabeelemente, auf. Die Haptikeinheit umfasst bevorzugt zumindest eine Schwingspule zu einer Erzeugung von Vibrationen oder andere, einem Fachmann als sinnvoll erscheinende Haptikelemente. Es kann vorteilhaft eine Signalisierung eines Zustands erreicht werden, der die tragbare Werkzeugmaschine beschädigen würde. Somit kann vorteilhaft ein sicherer Betrieb der tragbaren Werkzeugmaschine gewährleistet werden.

Die erfindungsgemäße Energieversorgungsvorrichtung, die erfindungsgemäße Ladevorrichtung und/oder die erfindungsgemäße tragbare Werkzeugmaschine sollen hierbei nicht auf die oben beschriebene Anwendung und Ausführungsform beschränkt sein. Insbesondere kann die erfindungsgemäße Energieversorgungsvorrichtung, die erfindungsgemäße Ladevorrichtung und/oder die erfindungsgemäße tragbare Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Energieversorgungsvorrichtung in einer schematischen Darstellung,
- Fig. 2: eine erfindungsgemäße Ladevorrichtung in einer schematischen Darstellung
- Fig. 3: eine alternative erfindungsgemäße Ladevorrichtung in einer schematischen Darstellung und
- Fig. 4: eine erfindungsgemäße tragbare Werkzeugmaschine in einer schematischen Darstellung.

### Beschreibung des Ausführungsbeispiels

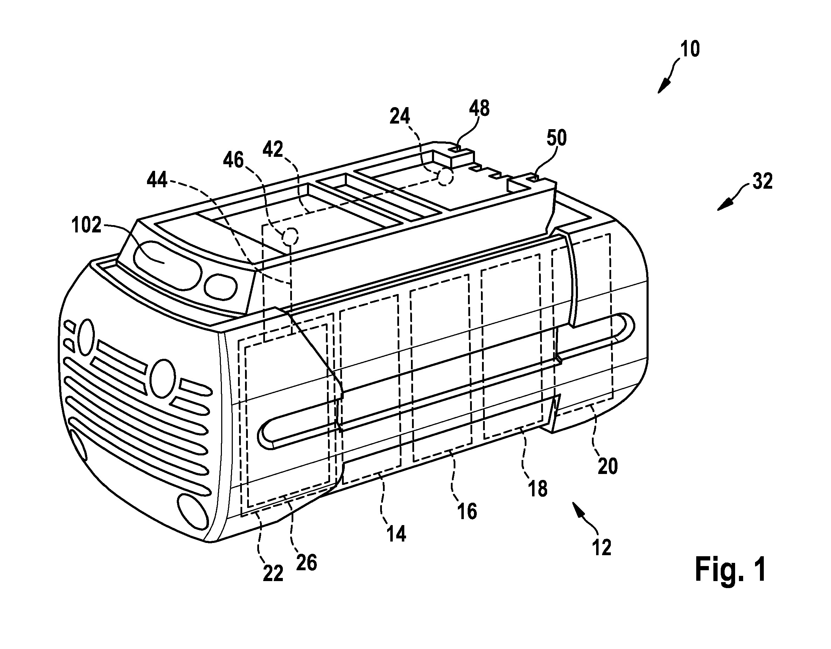

Figur 1 zeigt eine als Batterie ausgebildete Energieversorgungsvorrichtung 10, die eine Energiespeichereinheit 12 aufweist, die zumindest eine Speicherzelle 14, 16, 18, 20 umfasst. Insgesamt umfasst die Energiespeichereinheit 12 vier Speicherzellen 14, 16, 18, 20. Es ist jedoch auch denkbar, dass die Energiespeichereinheit 12 eine von vier abweichende Anzahl an Speicherzellen 14, 16, 18, 20 aufweist. Die Speicherzellen 14, 16, 18, 20 sind als wiederaufladbare Speicherzellen ausgebildet. Jede der Speicherzellen 14, 16, 18, 20 ist hierbei als galvanische Zelle ausgebildet. Somit ist die Energieversorgungsvorrichtung 10 als wiederaufladbare Batterie ausgebildet. Die Energieversorgungsvorrichtung 10 weist hierbei eine Ladezustandsanzeige 102 auf, die mehrere LEDs umfasst, die einem Bediener eine Information über einen momentanen Ladezustand der Speicherzellen 14, 16, 18, 20 anzeigt. Zudem weist die Energieversorgungsvorrichtung 10 eine Betriebsstoffspeichereinheit 22 zu einer Speicherung von einem Betriebsstoff auf, der von Betriebsstoffen der Speicherzellen 14, 16, 18, 20 verschieden ist. Die Betriebsstoffspeichereinheit 22 umfasst einen Betriebsstoffspeicherraum 26, in dem der Betriebsstoff gespeichert werden kann. Der Betriebsstoffspeicherraum 26 ist hierbei räumlich getrennt von den Speicherzellen 14, 16, 18, 20 angeordnet. Zu einer Realisierung einer räumlichen Trennung ist der Betriebsstoffspeicherraum 26 mittels einer Trennwand (hier nicht näher dargestellt) einer Gehäuseeinheit 32 der Energieversorgungsvorrichtung 10 auf eine, einem Fachmann bereits bekannte Art und Weise von den Speicherzellen 14, 16, 18, 20 räumlich getrennt angeordnet. Der Betriebsstoffspeicherraum 26 ist ferner verbindungsleitungsfrei zu den Speicherzellen 14, 16, 18, 20 angeordnet. Die Betriebsstoffspeichereinheit 22 ist als Schmiermittelspeichereinheit ausgebildet. Somit wird in dem Betriebsstoffspeicherraum 26 Schmiermittel als Betriebsstoff gespeichert.

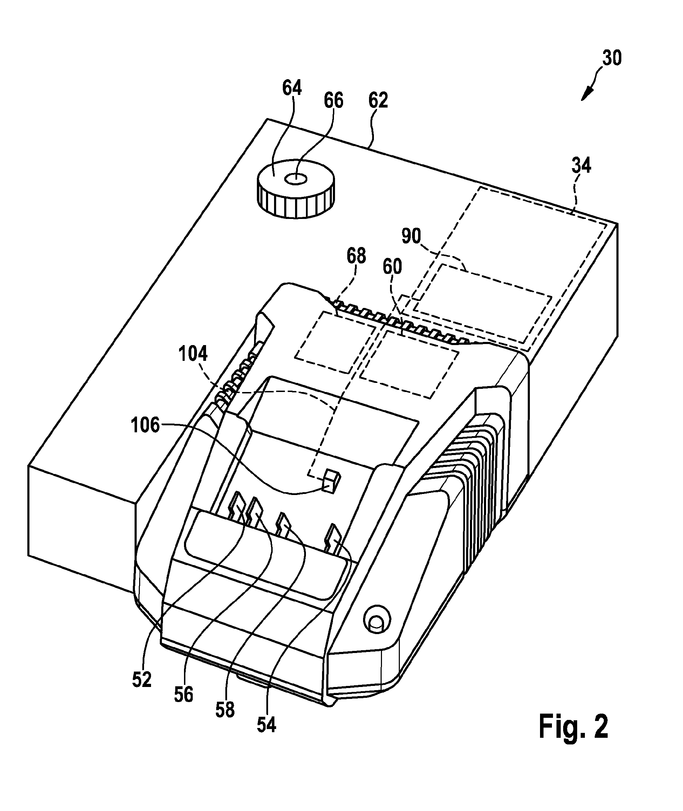

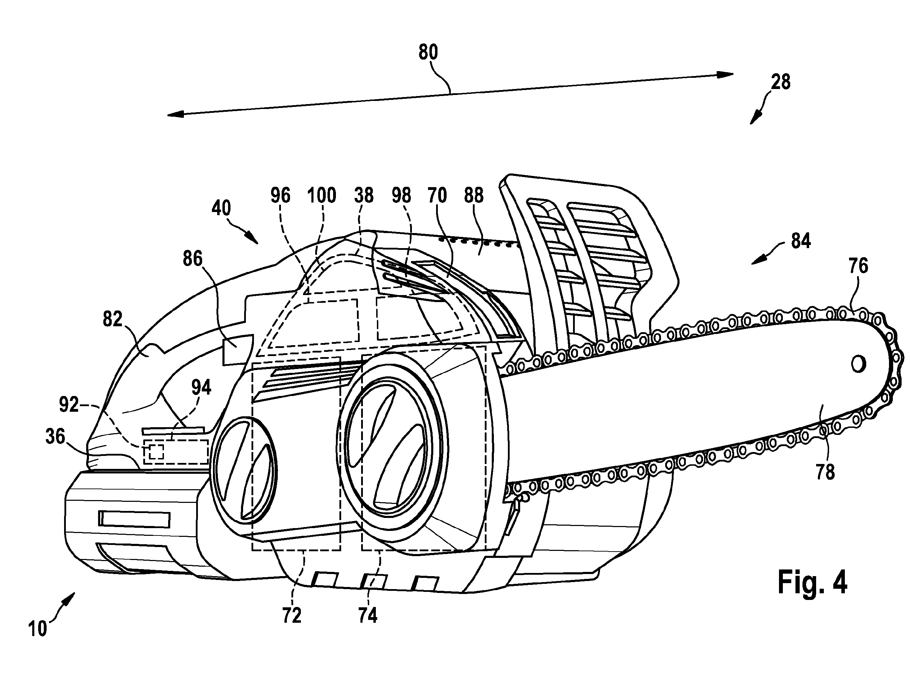

Die Gehäuseeinheit 32 der Energieversorgungsvorrichtung 10 umschließt die Energiespeichereinheit 12 und die Betriebsstoffspeichereinheit 22. Die Speicherzellen 14, 16, 18, 20 sind hierbei in Reihe geschaltet in der Gehäuseeinheit 32 angeordnet. Hierbei sind in der Gehäuseeinheit 32 auf eine, einem Fachmann bereits bekannte Art und Weise Kontaktelemente 48, 50 der Energiespeichereinheit 12 zu einer Kontaktierung mit Gegenkontaktelementen (hier nicht näher dargestellt) einer tragbaren Werkzeugmaschine 28 (Fig. 4) oder mit Ladekontaktelementen 52, 54, 56, 58 einer Ladevorrichtung 30 (Fig. 2) angeordnet.

Des Weiteren weist die Betriebsstoffspeichereinheit 22 ein Betriebsstoffventil 24 auf, das den Betriebsstoffspeicherraum 26 der Betriebsstoffspeichereinheit 22 in einem mit der tragbaren Werkzeugmaschine 28 (Fig. 4) oder der Ladevorrichtung 30 (Fig. 2) ungekoppelten Zustand selbsttätig verschließt. Das Betriebsstoffventil 24 ist hierbei über eine Betriebsstoffleitung 42 der Betriebsstoffspeichereinheit 22 mit dem Betriebsstoffspeicherraum 26 verbunden. In einem geschlossenen Zustand des Betriebsstoffventils 24 ist der Betriebsstoffspeicherraum 26 fluiddicht und/oder gasdicht verschlossen. Ferner ist das Betriebsstoffventil 24 dazu vorgesehen, den Betriebsstoffspeicherraum 26 in einem in der tragbaren Werkzeugmaschine 28 (Fig. 4) und/oder in der Ladevorrichtung 30 (Fig. 2) befindlichen Zustand selbsttätig zu öffnen. Das Betriebsstoffventil 24 ist als Rückschlagventil ausgebildet. Es ist jedoch auch denkbar, dass das Betriebsstoffventil 24 eine andere, einem Fachmann als sinnvoll erscheinende Ausgestaltung aufweist.

Die Betriebsstoffspeichereinheit 22 weist ferner eine Entlüftungsleitung 44 auf, die mit einem Ende mit dem Betriebsstoffspeicherraum 26 und mit einem weiteren Ende mit einem Betriebsstoffspeicherraumentlüftungsventil 46 der Betriebsstoffspeichereinheit 22 verbunden ist. Das Betriebsstoffspeicherraumentlüftungsventil 46 ist hierbei dazu vorgesehen, Gas aus dem Betriebsstoffspeicherraum 26 entweichen zu lassen und Fluid in Form von dem Betriebsstoff zurückzuhalten. Hierbei umfasst das Betriebsstoffspeicherraumentlüftungsventil 46 eine Membran (hier nicht näher dargestellt), die ein Entweichen von Gas ermöglicht und Fluid zurückhält. Das Betriebsstoffspeicherraumentlüftungsventil 46 ist dazu vorgesehen, bei einer Befüllung des Betriebsstoffspeicherraums 26 oder bei einem Überdruck im Betriebsstoffspeicherraum 26 infolge beispielsweise einer Erwärmung des im Betriebsstoffspeicherraum 26 gespeicherten Betriebsstoffs Gas abzulassen. Es ist jedoch auch denkbar, dass das Betriebsstoffspeicherraumentlüftungsventil 46 in das Betriebsstoffventil 24 integriert ist. Ferner ist es ebenfalls denkbar, dass das Betriebsstoffspeicherraumentlüftungsventil 46 eine andere, einem Fachmann als sinnvoll erscheinende Ausgestaltung aufweist als die Ausgestaltung mit Membran.

Figur 2 zeigt die Ladevorrichtung 30 zu einer Wiederaufladung der Energieversorgungsvorrichtung 10. Hierbei werden die Speicherzellen 14, 16, 18, 20 mittels einer einer Entladung umgekehrten Stromrichtung wieder aufgeladen. Die Ladevorrichtung 30 umfasst hierbei eine Steuer- und/oder Regeleinheit 60, die dazu vorgesehen ist, verschiedene Ladeverfahren zu realisieren, wie beispielsweise Schnellladen, Entladen und anschließendes Aufladen usw. Die Steuer- und/oder Regeleinheit 60 sensiert bei einer vollständigen Ladung der Speicherzellen 14, 16, 18, 20 eine Vollladung und schaltet den Ladevorgang ab, um die Speicherzellen 14, 16, 18, 20 vor einer Überladung zu schützen. Zudem umfasst die Ladevorrichtung 30 eine Betriebsstoffzuführeinheit 34, die dazu vorgesehen ist, den Betriebsstoffspeicherraum 26 der Betriebsstoffspeichereinheit 22 während eines Ladevorgangs der Speicherzellen 14, 16, 18, 20 mit dem als Schmiermittel ausgebildeten Betriebsstoff zu füllen. Die Betriebsstoffzuführeinheit 34 weist einen als Schmiermittelreservoir ausgebildeten Betriebsstoffvorratsbehälter 62 auf, in dem als Schmiermittel ausgebildeter Betriebsstoff zu einer Befüllung des Betriebsstoffspeicherraums 26 während eines Ladevorgangs der Speicherzellen 14, 16, 18, 20 in der Ladevorrichtung 30 angeordnet ist. Zudem weist die Betriebsstoffzuführeinheit 34 eine Pumpeneinheit 90 auf, die dazu vorgesehen ist, den Betriebsstoffspeicherraum 26 in einem mit der Ladevorrichtung 30 gekoppelten Zustand der Energieversorgungsvorrichtung 10 über das Betriebsstoffventil 24 und die Betriebsstoffleitung 42 mit Betriebsstoff zu befüllen. Die Pumpeneinheit 90 ist hierbei über eine Zuführleitung 104 der Betriebsstoffzuführeinheit 34 und einen Füllstutzen 106 der Betriebsstoffzuführeinheit 34 mit dem Betriebsstoffventil 24 zur Befüllung des Betriebsstoffspeicherraums 26 gekoppelt.

Der Betriebsstoffvorratsbehälter 62 kann bei Bedarf von einem Bediener und/oder von einer hier nicht näher dargestellten Zuführleitung jederzeit neu mit Betriebsstoff befüllt werden, um eine Zuführung von Betriebsstoff in den Betriebsstoffspeicherraum 26 während eines Ladevorgangs der Speicherzellen 14, 16, 18, 20 in der Ladevorrichtung 30 zu gewährleisten. Hierbei weist der Betriebsstoffvorratsbehälter 62 ein Verschlusselement 64 auf, das zu einer Befüllung abnehmbar an dem Betriebsstoffvorratsbehälter 62 angeordnet ist. Das Verschlusselement 64 weist zudem ein Entlüftungselement 66 auf, um einen Überdruck im Betriebsstoffvorratsbehälter 62 zu vermeiden. Zudem ist es denkbar, dass das Verschlusselement 64 ein Koppelelement (hier nicht näher dargestellt) aufweist, das mit einer hier nicht näher dargestellten Zuführleitung zu einer Befüllung des Betriebsstoffvorratsbehälters 62 mit Betriebsstoff gekoppelt werden kann.

Des Weiteren umfasst die Ladevorrichtung 30 eine Füllstandsüberwachungseinheit 68, die einen Füllstand des Betriebsstoffspeicherraums 26 während eines Ladevorgangs der Speicherzellen 14, 16, 18, 20 bzw. während einer Befüllung des Betriebsstoffspeicherraums 26 mittels der Betriebsstoffzuführeinheit 34 überwacht und anhand eines Ist-Zustands des Füllstands des Betriebsstoffspeicherraums 26 eine entsprechende Menge an Betriebsstoff in den Betriebsstoffspeicherraum 26 nachfüllt. Die Füllstandskontrolle kann hierbei auf eine, einem Fachmann bereits bekannte Art und Weise erfolgen, wie beispielsweise mittels Sensoren der Füllstandsüberwachungseinheit 68 oder mittels eines Schwimmers der Füllstandsüberwachungseinheit 68, der während einer Befüllung des Betriebsstoffspeicherraums 26 in den Betriebsstoffspeicherraum 26 eingeführt wird.

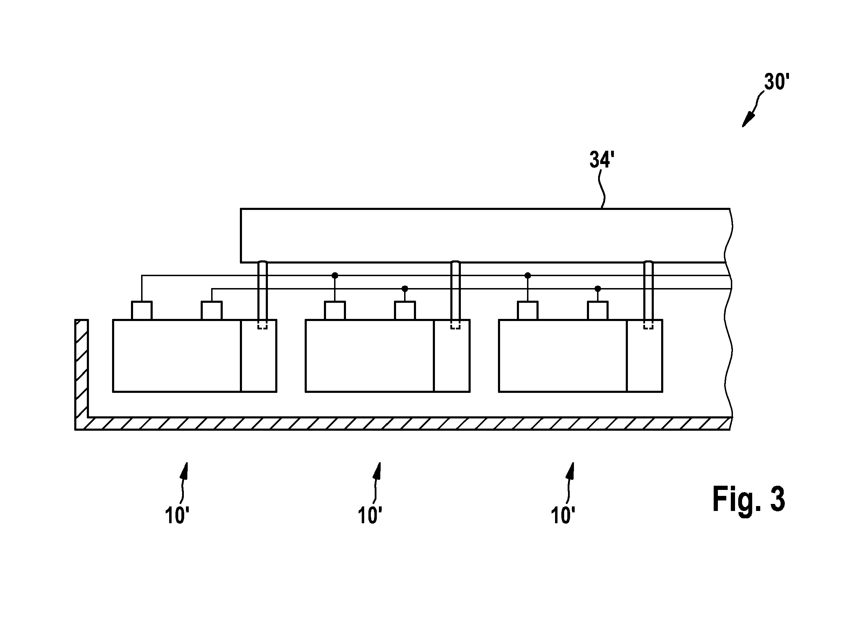

Figur 3 zeigt eine alternative Ladevorrichtung 30', die drei Ladeschnittstellen zu einer Aufnahme von drei Energieversorgungsvorrichtungen 10' umfasst, so dass Speicherzellen (hier nicht näher dargestellt) der drei Energieversorgungsvorrichtungen 10' gleichzeitig und unabhängig voneinander aufgeladen werden können und Betriebsstoffspeicherräume 26' der drei Energieversorgungsvorrichtungen 10' mit Betriebsstoff befüllt werden können. Es ist jedoch auch denkbar, dass die Ladevorrichtung 30' eine von drei abweichende Anzahl an Ladeschnittstellen aufweist. Die Ladevorrichtung 30' weist einen zumindest im Wesentlichen analogen Aufbau zur Ladevorrichtung 30 auf, die in der Figur 2 beschrieben wurde. Die Energieversorgungsvorrichtungen 10' weisen jeweils einen analogen Aufbau zur Energieversorgungsvorrichtung 10 auf, die in der Figur 1 beschrieben wurde.

Figur 4 zeigt eine als akkubetriebene Kettensäge ausgebildete tragbare Werkzeugmaschine 28, die eine Energieversorgungsschnittstelle 36 zu einer Aufnahme der Energieversorgungsvorrichtung 10 aufweist. Die Energieversorgungsvorrichtung 10 ist in einem mit der Energieversorgungsschnittstelle 36 gekoppelten Zustand dazu vorgesehen, eine Antriebseinheit 72 der tragbaren Werkzeugmaschine 28 mit Energie zu versorgen. Die tragbare Werkzeugmaschine 28 weist ferner ein Werkzeugmaschinengehäuse 70 auf. In dem Werkzeugmaschinengehäuse 70 ist die als Elektromotor ausgebildete Antriebseinheit 72 und eine Getriebeeinheit 74 zum Antrieb einer Sägekette 76 auf eine, einem Fachmann bereits bekannte Art und Weise angeordnet. Die Sägekette 76 ist auf einer Führungsschiene 78 gelagert, die sich entlang einer Haupterstreckungsrichtung 80 auf einer einem Haupthandgriff 82 der tragbaren Werkzeugmaschine 28 abgewandten Seite 84 des Werkzeugmaschinengehäuses 70 aus dem Werkzeugmaschinengehäuse 70 hinaus erstreckt. Ferner weist die tragbare Werkzeugmaschine 28 eine im Haupthandgriff 82 angeordnete Einschaltvorrichtung 86 zur Inbetriebnahme der als Elektromotor ausgebildeten Antriebseinheit 72 und einen Bügelhandgriff 88 zur Führung der tragbaren Werkzeugmaschine 28 auf.

In einem mit der Energieversorgungsschnittstelle 36 der tragbaren Werkzeugmaschine 28 gekoppelten Zustand der Energieversorgungsvorrichtung 10 ist der Betriebsstoffspeicherraum 26 über das Betriebsstoffventil 24 und die Betriebsstoffleitung 42 mit einer Betriebsstoffschnittstelle 92 einer Pumpeneinheit 94 der tragbaren Werkzeugmaschine 28 verbunden. Die Pumpeneinheit 94 ist hierbei dazu vorgesehen, den in dem Betriebsstoffspeicherraum 26 gespeicherten und als Schmiermittel ausgebildeten Betriebsstoff zu einer Schmierung der Sägekette 76 zu einer, einem Fachmann bereits bekannten Schmiermittelschnittstelle (hier nicht näher dargestellt) der tragbaren Werkzeugmaschine 28 zu fördern. Es ist jedoch in einer alternativen, hier nicht dargestellten Ausgestaltung der tragbaren Werkzeugmaschine 28 denkbar, dass die tragbare Werkzeugmaschine 28 entkoppelt von der Pumpeneinheit 94 ausgebildet ist und der als Schmiermittel ausgebildete Betriebsstoff beispielsweise mittels eines durch eine Bewegung der Sägekette 76 oder der Antriebseinheit 72 erzeugten Unterdrucks und/oder infolge einer Anordnung der Energieversorgungsvorrichtung 10, insbesondere des Betriebsstoffventils 24, in einer zumindest im Wesentlichen parallel zur Führungsschiene 78 verlaufenden Ebene oberhalb der Sägekette 76 eine Zuführung des als Schmiermittels ausgebildeten Betriebsstoffs zur Sägekette 76 erfolgt.

Des Weiteren weist die tragbare Werkzeugmaschine 28 eine Betriebsstoffüberwachungseinheit 38 auf, die dazu vorgesehen ist, ein Fehlen und/oder einen zu geringen Füllstand zumindest eines Betriebsstoffs zu sensieren. Hierbei kann zum einen ein Fehlen und/oder ein zu geringer Füllstand des Betriebsstoffs im Betriebsstoffspeicherraum 26 mittels beispielsweise Sensoren (hier nicht näher dargestellt) der Betriebsstoffüberwachungseinheit 38 oder mittels eines Schwimmers (hier nicht näher dargestellt) der Betriebsstoffüberwachungseinheit 38, der während einer Kopplung der Energieversorgungsvorrichtung 10 mit der Schmiermittelschnittstelle in den Betriebsstoffspeicherraum 26 einführbar ist, sensiert werden. Zum anderen kann ein Fehlen und/oder ein zu geringer Füllstand von Betriebsstoffen der tragbaren Werkzeugmaschine 28 auf eine, einem Fachmann bereits bekannte Art und Weise sensiert werden. Die Betriebsstoffüberwachungseinheit 38 umfasst des Weiteren eine Signalisierungseinheit 40, die dazu vorgesehen ist, einem Bediener ein Fehlen und/oder einen zu geringen Füllstand zumindest eines Betriebsstoffs zu signalisieren. Die Signalisierungseinheit 40 umfasst eine als LC-Display ausgebildete Anzeigeeinheit 96, die einem Bediener Informationen über ein Fehlen und einen genauen Füllstand von einzelnen Betriebsstoffen und/oder einen Ladezustand der Speicherzellen 14, 16, 18, 20 der Energieversorgungsvorrichtung 10 in einem mit der tragbaren Werkzeugmaschine 28 gekoppelten Zustand anzeigt. Ferner umfasst die Signalisierungseinheit 40 eine als Lautsprecher ausgebildete Akustikeinheit 98, die bei einem Fehlen und/oder einem zu geringen Füllstand eines Betriebsstoffs ein Warnsignal ausgibt. Zudem umfasst die Signalisierungseinheit 40 eine als Vibrationserreger ausgebildete Haptikeinheit 100, die einem Bediener mittels einer Vibration ein Fehlen und/oder einen zu geringen Füllstand eines Betriebsstoffs signalisiert. Es ist jedoch auch denkbar, dass die Anzeigeeinheit 96 und/oder die Akustikeinheit 98 und/oder die Haptikeinheit 100 eine andere, einem Fachmann als sinnvoll erscheinende Ausgestaltung aufweisen.

## Patentansprüche

1. Energieversorgungsvorrichtung, insbesondere Batterie, mit zumindest einer Energiespeichereinheit (12), die zumindest eine Speicherzelle (14, 16, 18, 20) umfasst,
**gekennzeichnet durch** zumindest eine Betriebsstoffspeichereinheit (22) zu einer Speicherung von zumindest einem Betriebsstoff, der von Betriebsstoffen der Speicherzelle (14, 16, 18, 20) verschieden ist.

2. Energieversorgungsvorrichtung nach Anspruch 1,
**dadurch gekennzeichnet, dass** die Speicherzelle (14, 16, 18, 20) als wiederaufladbare Speicherzelle ausgebildet ist.

3. Energieversorgungsvorrichtung nach einem der vorhergehenden Ansprüche,
**dadurch gekennzeichnet, dass** die Betriebsstoffspeichereinheit (22) zumindest ein Betriebsstoffventil (24) aufweist, das einen Betriebsstoffspeicherraum (26) der Betriebsstoffspeichereinheit (22) selbsttätig verschließt.

4. Energieversorgungsvorrichtung nach Anspruch 3,
**dadurch gekennzeichnet, dass** das Betriebsstoffventil (24) dazu vorgesehen ist, den Betriebsstoffspeicherraum (26) in einem in einer tragbaren Werkzeugmaschine und/oder in einer Ladevorrichtung befindlichen Zustand selbsttätig zu öffnen.

5. Energieversorgungsvorrichtung nach einem der vorhergehenden Ansprüche,
**gekennzeichnet durch** eine Gehäuseeinheit (32), die die Energiespeichereinheit (12) und die Betriebsstoffspeichereinheit (22) umschließt.

6. Ladevorrichtung zu einer Wiederaufladung der Energieversorgungsvorrichtung nach einem der vorhergehenden Ansprüche.

7. Ladevorrichtung nach Anspruch 6,
**gekennzeichnet durch** zumindest eine Betriebsstoffzuführeinheit (34), die dazu vorgesehen ist, einen Betriebsstoffspeicherraum (26) der Betriebsstoffspeichereinheit (22) während eines Ladezustands mit zumindest dem Betriebsstoff zu füllen.

8. Tragbare Werkzeugmaschine, insbesondere Kettensäge, mit einer Energieversorgungsschnittstelle (36) zu einer Aufnahme einer Energieversorgungsvorrichtung nach einem der Ansprüche 1 bis 5.

9. Tragbare Werkzeugmaschine nach Anspruch 8,
**gekennzeichnet durch** zumindest eine Betriebsstoffüberwachungseinheit (38), die dazu vorgesehen ist, ein Fehlen und/oder einen zu geringen Füllstand zumindest eines Betriebsstoffs zu sensieren.

10. Tragbare Werkzeugmaschine nach Anspruch 9,
**dadurch gekennzeichnet, dass** die Betriebsstoffüberwachungseinheit (38) zumindest eine Signalisierungseinheit (40) umfasst, die dazu vorgesehen ist, einem Bediener ein Fehlen und/oder einen zu geringen Füllstand zumindest eines Betriebsstoffs zu signalisieren.
